# EUROPEAN PATENT APPLICATION

(11) **EP 4 439 687 A1**
(43) Date of publication of application: **02.10.2024**
(21) Application number: 23215680.2
(22) Date of filing: 11.12.2023
(51) Int. Cl.: H01M 4/04, H01M 4/131, H01M 4/133, H01M 4/36, H01M 4/38, H01M 4/48, H01M 4/583, H01M 4/587, H01M 4/62, H01M 10/052, H01M 10/0525, H01M 4/485, H01M 4/02

(54) **NEGATIVE ELECTRODE FOR LITHIUM SECONDARY BATTERY AND LITHIUM SECONDARY BATTERY COMPRISING THE SAME**

(30) Priority: 15.12.2022 KR 20220175660
(71) Applicant: SK On Co., Ltd., Seoul 03161 (KR)
(72) Inventor: KIM, Hyo Mi, 34124 Daejeon (KR); JANG, Hwan Ho, 34124 Daejeon (KR); CHUNG, Da Bin, 34124 Daejeon (KR); KIM, Moon Sung, 34124 Daejeon (KR); RYU, Sang Baek, 34124 Daejeon (KR); PARK, Da Hye, 34124 Daejeon (KR); BANG, Sang In, 34124 Daejeon (KR); YOOK, Seung Hyun, 34124 Daejeon (KR); HAN, Jun Hee, 34124 Daejeon (KR)
(74) Representative: Prüfer & Partner mbB Patentanwälte · Rechtsanwälte

(57) **Abstract**

A negative electrode for a lithium secondary battery and a lithium secondary battery including the same are disclosed.

In some implementations, the negative electrode for a secondary battery includes a negative electrode current collector, a first negative electrode mixture layer including a first silicon-based negative electrode active material on at least one surface of the negative electrode current collector, and a second negative electrode mixture layer including a second silicon-based negative electrode active material on the first negative electrode mixture layer, wherein the second silicon-based negative electrode active material is SiOx (0≤x<2) doped with a metal element.

## Description

### TECHNICAL FIELD

The technology and implementations disclosed in this patent document generally relate to a negative electrode for a lithium secondary battery and a lithium secondary battery including the same.

### BACKGROUND

As interest in environmental issues has recently increased, exhaust gas discharged from vehicles powered by fossil fuels, such as gasoline or diesel, has been pointed out as one of the main causes of air pollution, and many studies have been conducted on electric vehicles (EVs), hybrid electric vehicles (HEVs), etc., that may replace vehicles using fossil fuels.

In addition, lithium secondary batteries having a high discharge voltage and output stability have mainly been used as power sources for electric vehicles (EVs) and hybrid electric vehicles (HEVs). In addition, as the need for high-energy secondary batteries having a high energy density has increased, development and research on a high-capacity negative electrode therefor have also been actively conducted.

Recently, in order to implement a secondary battery having high capacity and high energy density, a silicon-based negative electrode active material having a discharge capacity higher than that of graphite has been applied to negative electrodes for secondary batteries. As a silicon-based material, a mixture of silicon oxide and carbon exhibits a high capacity of 30000 mA/g.

However, silicon-based active materials, such as silicon oxide, increase resistance due to side reactions with electrolyte and have a very high amount of volume contraction and expansion during charging and discharging, resulting in deteriorations in battery lifespan and rapid charging characteristics due to short circuits or cracks in active materials.

### SUMMARY

The disclosed technology may be implemented in some exemplary embodiments to provide a negative electrode capable of suppressing an increase in resistance by suppressing a side reaction with an electrolyte resulting from the use of a silicon-based negative electrode active material and a secondary battery including the same.

The disclosed technology may also be implemented in some exemplary embodiments to provide a negative electrode including a silicon-based negative electrode active material, capable of suppressing short circuits and active material cracks caused by an increase in volume contraction and expansion during charging and discharging, and a lithium secondary battery including the same.

In some exemplary embodiments of the disclosed technology, a negative electrode for a secondary battery includes: a negative electrode current collector; a first negative electrode mixture layer including a first silicon-based negative electrode active material on at least one surface of the negative electrode current collector; and a second negative electrode mixture layer including a second silicon-based negative electrode active material on the first negative electrode mixture layer, wherein the second silicon-based negative electrode active material is SiOx (0≤x<2) doped with a metal element.

The metal element may be at least one selected from the group consisting of Mg, Li, Ca, Al, Fe, Ti, and V.

The content of the second silicon-based negative electrode active material having a particle size of 2.5 um or less may be less than 5 volume% of a total content of the second silicon-based negative electrode active material.

The first silicon-based negative electrode active material may be SiOx coated with carbon.

The content of the first silicon-based negative electrode active material having a particle size of 2.5 um or less may be 1 volume% or more and less than 15 volume% of the total content of the first silicon-based negative electrode active material.

The content of the second silicon-based negative electrode active material may be greater than the content of the first silicon-based negative electrode active material with respect to a total weight of the first negative electrode mixture layer and the second negative electrode mixture layer.

In the first negative electrode mixture layer, the content of the first silicon-based negative electrode active material may be 2 to 6 wt%.

In the second negative electrode mixture layer, the content of the second silicon-based negative electrode active material may be 7 to 30 wt%.

The first negative electrode mixture layer and the second negative electrode mixture layer may further include a graphite-based active material.

The first negative electrode mixture layer and the second negative electrode mixture layer may further include a conductive agent.

The second negative electrode mixture layer may include at least one selected from the group consisting of SWCNT, TWCNT, and MWCNT as a conductive agent.

In some exemplary embodiments of the disclosed technology, a lithium secondary battery includes: the at least one negative electrode described above, a positive electrode, and a separator interposed between the negative electrode and the positive electrode.

### BRIEF DESCRIPTION OF DRAWINGS

Certain aspects, features, and advantages of the disclosed technology are illustrated by the following detailed description with reference to the accompanying drawings.

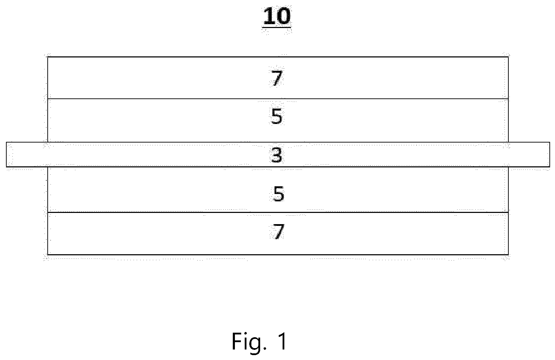

FIG. 1 is a view schematically illustrating a cross-section of a negative electrode according to the present disclosure.

### DETAILED DESCRIPTION

Features of the disclosed technology disclosed in this patent document are described by example exemplary embodiments with reference to the accompanying drawings.

The disclosed technology may be implemented in some exemplary embodiments to provide a negative electrode including a silicon-based negative electrode active material, and the present disclosure will be described in detail with reference to the accompanying drawings.

FIG. 1 is a view schematically illustrating a cross-section of a negative electrode according to the present disclosure, in which a negative electrode 10 includes a first negative electrode mixture layer 5 formed on one or both surfaces of a negative electrode current collector 3 and a second negative electrode mixture layer 7 formed on the first negative electrode mixture layer 5.

The negative electrode current collector 3 is commonly used in the manufacture of a negative electrode of a secondary battery, and may be used without particular limitation as long as it has conductivity without causing chemical change in the battery. For example, as the negative electrode current collector, copper, stainless steel, aluminum, nickel, titanium, fired carbon, copper or stainless steel surface-treated with carbon, nickel, titanium, silver, etc., an aluminum-cadmium alloy, etc. may be used. In addition, the negative electrode current collector may be formed to have fine irregularities on a surface thereof to enhance bonding strength of the negative electrode active material, and various forms, such as films, sheets, foils, nets, porous bodies, foams, and nonwoven fabrics may be used.

A negative electrode mixture layer is included on the surface of the negative electrode current collector 3, and as shown in FIG. 1, the negative electrode mixture layer includes the first negative electrode mixture layer 5 located on the negative electrode current collector 3 inside the negative electrode mixture layer toward the surface of the negative electrode mixture layer from the negative electrode current collector 3 and the second negative electrode mixture layer 7 formed as a surface of the negative electrode mixture layer and located on an outer side.

The negative electrode mixture layer may further include one or more additional negative electrode mixture layers on the first negative electrode mixture layer 5 and the second negative electrode mixture layer 7. The additional negative electrode mixture layer is not particularly limited, and may be, for example, one layer or two or more layers.

The first negative electrode mixture layer 5 and the second negative electrode mixture layer 7 include a silicon-based negative electrode active material. The silicon-based negative electrode active material that may be generally used as a negative electrode active material may also be suitably used in the present disclosure, and at least one selected from the group consisting of SiOx (0≤x<2), a Si-C composite, and a Si-Y alloy (here, Y is an element selected from the group consisting of alkali metals, alkaline earth metals, transition metals, Group 13 elements, Group 14 elements, rare earth elements, and combinations thereof) may be used and may be, for example, SiOx.

The silicon-based negative electrode active material (first silicon-based negative electrode active material) included in the first negative electrode mixture layer 5 may include carbon. The silicon-based negative electrode active material including carbon may be specifically a carbon-coated silicon-based negative electrode active material or may be a composite of silicon and carbon. Here, in the silicon-based negative electrode active material including carbon, the content of carbon may be 2 to 5 wt% but is not limited thereto.

The carbon-coated silicon-based negative electrode active material has a carbon coating layer on the surface of the silicon-based negative electrode active material, and specifically, it may be carbon-coated SiOx but is not limited thereto. The carbon coating layer may be formed on a portion, as well as the entire surface, of the silicon-based negative electrode active material. In addition, the carbon coating layer may have, for example, an average thickness of 5 to 50 nm, but is not limited thereto.

As described above, when a silicon-based negative electrode active material, more specifically, a carbon-coated silicon-based negative electrode active material, is included as the negative electrode active material of the first negative electrode mixture layer 5, a problem caused by a deterioration of high-temperature lifespan characteristics in the case of using an Mg-doped silicon-based negative electrode active material is used as the negative electrode active material of the second negative electrode mixture layer 7 in the present disclosure may be solved.

In the first negative electrode mixture layer 5, the amount of the first silicon-based negative electrode active material may be 2 to 6 wt%. If the amount of the first silicon-based negative electrode active material is less than 2 wt%, an excessive amount of the second silicon-based negative electrode active material should be disposed in an upper layer when the same energy density is realized. In this case, excessive side reactions between the electrolyte and the second silicon-based negative electrode active material may occur to degrade battery performance. Meanwhile, if the amount of the first silicon-based negative electrode active material exceeds 6 wt%, the first negative electrode mixture layer may be detached from the negative electrode current collector 3 due to a short circuit in the battery due to volume contraction and expansion of the first silicon-based active material.

The first silicon-based negative electrode active material included in the first negative electrode mixture layer 5 may have an average particle size (D50) of 4 to 10 µm, more specifically 4 to 7 um, or 5 to 6 µm, but is not limited thereto.

The first silicon-based negative electrode active material included in the first negative electrode mixture layer 5 may include fine powder. The first silicon-based negative electrode active material of fine powder has a particle size of 2.5 µm or less. If the particle size of the first silicon-based negative electrode active material of fine powder exceeds 2.5 um, the first silicon-based negative electrode active material of fine powder itself may severely contract and expand due to charging and discharging of lithium ions, and as charging and discharging are repeated, binding between particles may deteriorate, resulting in a decrease in cycle characteristics.

Since the first negative electrode mixture layer 5 is a region relatively less contacting the electrolyte, excessive side reactions with the electrolyte may be prevented even if the first negative electrode mixture layer 5 includes the first silicon-based negative electrode active material of fine powder. In addition, by including the first silicon-based negative electrode active material of fine powder, a contact area between the negative electrode active materials of the first negative electrode mixture layer 5 and between the negative electrode active material and the negative electrode current collector 3 may increase, thereby alleviating a short-circuit between negative active materials that may occur due to contraction and expansion of the silicon-based negative active materials during a charge and discharge process of the battery.

Specifically, the first silicon-based negative electrode active material of fine powder included in the first negative electrode mixture layer 5 may be 1 volume% or more and less than 15 volume% of the volume of the first silicon-based negative electrode active material included in the first negative electrode mixture layer 5.

The second negative electrode mixture layer 7 includes a silicon-based negative electrode active material different from that of the first negative electrode mixture layer 5. Specifically, the second negative electrode mixture layer 7 includes a silicon-based negative electrode active material doped with a predetermined element, as a second silicon-based negative electrode active material.

The silicon-based negative electrode active material (the second silicon-based negative electrode active material) included in the second negative electrode mixture layer 7 may be a silicon-based negative electrode active material doped with at least one metal selected from the group consisting of Mg, Li, Ca, Al, Fe, Ti, and V.

In addition, the silicon-based negative electrode active material doped with the above metal may include a compound including at least one metal among the above metals. For example, the silicon-based negative electrode active material doped with the above metal may include SiOx including a lithium compound or a magnesium compound, and may be SiOx pretreated with lithium or magnesium, and more specifically, it may include lithium silicate or magnesium silicate.

When the second negative electrode mixture layer 7 includes the silicon-based negative electrode active material doped with the metal as described above, contraction and expansion of the silicon-based negative electrode active material may be suppressed by the doping element and cracks and short circuits occurring due to stress may be suppressed, so that room temperature lifespan characteristics and rapid charging characteristics of a negative electrode including a silicon-based negative electrode active material may be improved.

The content of the second silicon-based negative electrode active material included in the second negative electrode mixture layer 7 may be 7 to 30 wt%. If the content of the second silicon-based negative electrode active material is less than 7 wt%, the content of the carbon-based negative electrode active material may increase compared to the silicon-based negative electrode active material, thereby lowering the initial efficiency and making it difficult to implement a high energy density cell. If the content of the second silicon-based negative electrode active material exceeds 30 wt%, a short circuit may occur in the battery due to volume expansion according to charging and discharging and cell performance may be deteriorated due to a side reaction between the excessive amount of the silicon-based negative electrode active material and the electrolyte.

The second negative electrode mixture layer 7 may be located on the surface of the entire negative electrode mixture layer and may easily contact the electrolyte, and therefore, the second silicon-based negative electrode active material present in the second negative electrode mixture layer 7 may easily side-reacted with the electrolyte to easily cause an increase in resistance and may also have high contraction and expansion characteristics during charging and discharging. These side reaction and contraction/expansion characteristics tend to increase as the particle size of the silicon-based negative electrode active material decreases. Therefore, as the second silicon-based negative active material included in the second negative electrode mixture layer 7 has a smaller content of fine powder having a particle size of 2.5 µm or less, side reactions with the electrolyte may be prevented and the contraction/expansion characteristics may be suppressed.

More specifically, the second silicon-based negative electrode active material included in the second negative electrode mixture layer 7 is preferable as the content of the silicon-based negative electrode active material of fine powder having a particle size of 2.5 um or less is reduced, but without being limited thereto, the content of the silicon-based negative electrode active material of fine powder may be less than 5 volume%.

An average particle size of the second silicon-based negative electrode active material included in the second negative electrode mixture layer 7 may be greater than an average particle size of the first silicon-based negative electrode active material included in the first negative electrode mixture layer 5. In this manner, by using a silicon-based negative electrode active material having a large average particle size with respect to the silicon-based negative electrode active material included in the second negative electrode mixture layer 7, side reactions with the electrolyte may be suppressed, and by using a silicon-based negative electrode active material having an average particle size included in the first negative electrode mixture layer 5, the contact area between the negative electrode active materials and between the negative electrode active material and the negative electrode current collector 3 may be widened to improve short circuit characteristics.

Although not limited thereto, the average particle size of the second silicon-based negative electrode active material included in the second negative electrode mixture layer 7 may be 4 to 8 um, and the average particle size of the first silicon-based negative electrode active material included in the first negative electrode mixture layer 5 may be smaller than the average particle size of the second silicon-based negative electrode active material and may be 3 to 7 um but is not limited thereto.

In the present disclosure, the content of the second silicon-based negative electrode active material included in the second negative electrode mixture layer 7 may be greater than the content of the first silicon-based negative electrode active material included in the first negative electrode mixture layer 5.

Since a diffusion rate of lithium ions in the silicon-based negative electrode active material is slower than that of the graphite-based negative electrode active material, lifespan characteristics may be improved by placing an excessive amount of the silicon-based active material on the upper layer of the negative electrode, that is, the second negative electrode mixture layer 7, which is in contact with the electrolyte. In contrast, if an excessive amount of silicon-based negative electrode active material is located in the lower layer, that is, the first negative electrode mixture layer 5, lifespan characteristics may be rapidly lowered due to detachment between the negative electrode current collector 3 and the first negative electrode mixture layer 5 due to contraction and expansion of the silicon-based negative electrode active material in the process of charging and discharging the battery.

As the second negative electrode mixture layer 7, which is an upper layer, is thicker than the first negative electrode mixture layer 5, lifespan performance of the battery may be more advantageously improved. Therefore, the first negative electrode mixture layer 5 and the second negative electrode mixture layer 7 may have a thickness ratio of 2 to 5:5 to 8, but is not limited thereto.

The first and second negative electrode mixture layers 5 and 7 may each independently further include an additional silicon-based negative electrode active material in addition to the silicon-based negative electrode active material described above. Specifically, the first negative electrode mixture layer 5 may further include general silicon-based negative electrode active materials in addition to the carbon-coated silicon-based negative electrode active material, and the second negative electrode mixture layer 7 may further include general silicon-based negative electrode active materials other than the doped silicon-based negative electrode active material.

The first and second negative electrode mixture layers 5 and 7 may each independently include a carbon-based negative electrode active material as a negative electrode active material. The carbon-based negative electrode active material is not particularly limited, but may be, for example, at least one selected from the group consisting of artificial graphite, natural graphite, and graphitized mesocarbon microbeads, and more specifically, artificial graphite may be used, and a mixture of artificial graphite and natural graphite may be used.

The carbon-based negative electrode active material included in the first and second negative electrode mixture layers 5 and 7 is not limited thereto, but may be, for example, 30 to 95 wt% of the total weight of each of the negative electrode mixture layers 5 and 7. The content of the carbon-based negative electrode active material may be the same as or different from each other with respect to the first and second negative electrode mixture layers 5 and 7, and may be independent of each other.

In addition, each of the first and second negative electrode mixture layers 5 and 7 may independently include a binder for bonding between negative electrode active materials. As the binder, at least one selected from the group consisting of a rubber-based binder and a water-soluble polymer-based binder may be used.

As the rubber-based binder, a rubber-based binder which is not soluble in aqueous solvents, such as water, but has water dispersibility to be smoothly dispersed in aqueous solvents, may be used. For example, the rubber-based binder may include at least one selected from styrene butadiene rubber (SBR), hydrogenated nitrile butadiene rubber (HNBR), acrylonitrile butadiene rubber, acrylic rubber, butyl rubber, and fluoro rubber. Specifically, it may include at least one selected from the group consisting of styrene butadiene rubber and hydrogenated nitrile butadiene rubber, more specifically, styrene butadiene rubber, in terms of ease of dispersion and excellent phase stability.

In addition, the water-soluble polymer-based binder is soluble in aqueous solvents, such as water, and may include polyvinyl alcohol (PVA), polyacrylic acid (PAA), polyethylene glycol (PEG), and polyacrylonitrile (PAN), polyacrylamide (PAM), and carboxylmethyl cellulose (CMC).

Each of the rubber-based binder and the water-soluble polymer-based binder is not limited thereto, but may be included in an amount of 0.5 to 3 wt% based on the total weight of each of the first and second negative electrode mixture layers 5 and 7.

Furthermore, the first and second negative electrode mixture layers 5 and 7 may each independently include a conductive agent to improve conductivity. When the conductive agent is included, for example, one or more selected from the group consisting of graphite, carbon black, CNT, metal powder, and conductive oxide may be used, but is not particularly limited.

More specifically, different types of conductive agents may be used in the first negative electrode mixture layer 5 and the second negative electrode mixture layer 7. For example, the first negative electrode mixture layer 5 may use at least one conductive agent selected from the group consisting of MWCNT, SWCNT, TWCNT, graphite, carbon black, metal powder, and conductive oxide, and the second negative electrode mixture layer 7 including a large amount of silicon-based active materials may use at least one conductive agent selected from the group consisting of SWCNT, MWCNT, and TWCNT in order to improve the effect of preventing peeling due to contraction and expansion of the silicon-based active material during charging and discharging.

The conductive agent may be independently included in an amount of 0.1 to 3 wt% based on the total weight of each of the negative electrode mixture layers 5 and 7.

As described above, according to the present disclosure, a silicon-based negative electrode active material doped with an alkali metal or alkaline earth metal element, and, if necessary, without fine powder, may be applied to the second negative electrode mixture layer 7, which is the upper layer of the negative electrode mixture layer, and a silicon-based negative electrode active material, and, if necessary, a carbon-coated silicon-based negative electrode active material, more specifically, including fine powder, may be applied to the first negative electrode mixture layer 5, which is the lower layer, thereby providing the negative electrode controlled in a side reaction with the electrolyte, having improved high-temperature characteristics, and having improved short-circuit characteristics.

### Example

Hereinafter, the present disclosure will be described in more detail with reference to examples. The following examples are intended to represent an example of the present disclosure and are not intended to limit the present disclosure thereby.

### Example 1 and Comparative Examples 1 to 6

A first negative electrode slurry was prepared by mixing graphite as a carbon-based active material, A1, A2, B1, or B2 as a silicon-based active material, MWCNT as a conductive agent, and SBR and CMC as a binder with water as a solvent in the amounts shown in Table 1.

In addition, a second negative electrode slurry was prepared by mixing graphite as a carbon-based active material, A1, A2, B1, or B2 as a silicon-based active material, SWCNT as a conductive agent, and SBR and CMC as a binder with water as a solvent in the amounts shown in Table 1.

At this time, A1, A2, B1 and B2 are respectively as follows.
A1: SiOx coated with carbon, content of fine powder having a particle size less than 2.5 µm = 3 volume%
A2: SiOx coated with carbon, content of fine powder having a particle size less than 2.5 µm = 10 volume%
B1: Mg-doped SiOx, content of fine powder having a particle size less than 2.5 µm = 3 volume%
B2: Mg-doped SiOx, content of fine powder having a particle size less than 2.5 µm = 10 volume%

**[Table 1]**

| | | carbon-based active material | | silicon-based active material | | conductive additive | | SBR (wt %) | CMC (wt %) |
|---|---|---|---|---|---|---|---|---|---|
| | | kind | wt % | kind | wt % | kind | wt % | | |
| Exampl e 1 | first mixture layer | graphi te | 89.9 | A2 | 6 | MWCNT | 0.5 | 2.4 | 1.2 |
| | second mixture layer | | 83.1 | B1 | 15 | SWCNT | 0.1 | 0.6 | 1.2 |
| Compar ative Exampl e 1 | first mixture layer | graphi te | 89.9 | A2 | 6 | MWCNT | 0.5 | 2.4 | 1.2 |
| | second mixture layer | | 83.1 | A1 | 15 | SWCNT | 0.1 | 0.6 | 1.2 |
| Compar ative Exampl e 2 | first mixture layer | graphi te | 89.9 | A2 | 6 | MWCNT | 0.5 | 2.4 | 1.2 |
| | second mixture layer | | 83.1 | B2 | 15 | SWCNT | 0.1 | 0.6 | 1.2 |
| Compar ative Exampl e 3 | first mixture layer | graphi te | 89.9 | B2 | 6 | MWCNT | 0.5 | 2.4 | 1.2 |
| | second mixture layer | | 83.1 | B1 | 15 | SWCNT | 0.1 | 0.6 | 1.2 |
| Compar ative Exampl e 4 | first mixture layer | graphi te | 89.9 | A1 | 6 | MWCNT | 0.5 | 2.4 | 1.2 |
| | second mixture layer | | 83.1 | B1 | 15 | SWCNT | 0.1 | 0.6 | 1.2 |
| Compar ative Exampl e 5 | first mixture layer | graphi te | 89.9 | B2 | 6 | MWCNT | 0.5 | 2.4 | 1.2 |
| | second mixture layer | | 83.1 | A1 | 15 | SWCNT | 0.1 | 0.6 | 1.2 |
| Compar ative Exampl e 6 | first mixture layer | graphi te | 89.9 | B1 | 6 | MWCNT | 0.5 | 2.4 | 1.2 |
| | second mixture layer | | 83.1 | A1 | 15 | SWCNT | 0.1 | 0.6 | 1.2 |

The prepared first negative electrode slurry was applied to a copper foil as a current collector, dried at 80°C to form a first negative electrode mixture layer, and then a second negative electrode slurry was applied to the first negative electrode mixture layer and then dried at 80°C to form a second negative electrode mixture layer to prepare a negative electrode.

### Evaluation of battery performance

A positive electrode was prepared by applying a slurry including an NCM-based active material, which is a lithium-transition metal composite oxide, to an aluminum foil and drying the same.

An electrode assembly was prepared by using the prepared positive electrode and each of the negative electrodes prepared in Example 1 and Comparative Examples 1 to 6 with a polyolefin separator interposed therebetween, the electrode assembly was placed in a pouch for a secondary battery, an electrolyte solution in which 1M LiPF₆ was dissolved was injected into a solvent mixed with ethylene carbonate (EC) and diethyl carbonate (DEC), and then sealed to manufacture a pouch-type lithium secondary battery.

For each pouch-type lithium secondary battery prepared above, room temperature and high temperature capacity retention rates and rapid charge capacity retention rates were evaluated, respectively, and the results are shown in Table 2. The evaluation method of each battery performance is as follows.

### 1) Room temperature (25°C) capacity retention rate

For the secondary battery, evaluation of lifespan characteristics in the range of DOD94 (SOC4-98%) was performed in a chamber maintained at 25°C.

Under constant current/constant voltage (CC/CV) conditions, it was charged at 0.3C to a voltage corresponding to SOC98%, then cut off at 0.05C, then discharged at 0.3C to a voltage corresponding to SOC4% under constant current (CC) conditions, and a discharge capacity thereof was measured.

After repeating this for 500 cycles, the capacity retention rate at the time of room temperature lifespan characteristic evaluation was measured by measuring a discharge capacity retention rate compared to an initial discharge capacity in %.

### 2) High temperature (45°C) capacity retention rate

Regarding the secondary battery, the capacity retention rate at the time of high-temperature lifespan characteristic evaluation was measured by the same method as the room temperature (25°C) lifespan characteristic evaluation in a chamber maintained at 45 °C.

### 3) Rapid charge capacity retention rate

Regarding the secondary battery, it was charged to reach DOD72% within 35 minutes according to the following step charging method, and then discharged at 1/3C.
Step charge = C-rate: 2.5C/2.25C/2.0C/1.75C/1.5C/1.25C/1.0C/0.75C/0.5C

300 cycles were repeated with charge/discharge set as one cycle and a waiting time of 10 minutes given between charge/discharge cycles, and then the rapid charge capacity retention rate was evaluated by measuring the discharge capacity retention rate compared to the initial discharge in %.

**[Table 2]**

| | Room temperature capacity retention rate (%) | high temperature capacity retention rate (%) | rapid charge capacity retention rate (%) |
|---|---|---|---|
| Example 1 | 95.1 | 88.3 | 97.5 |
| Comparative Example 1 | 89.2 | 89.4 | 89.8 |
| Comparative Example 2 | 92.8 | 85.5 | 95.3 |
| Comparative Example 3 | 95.3 | 81.8 | 97.7 |
| Comparative Example 4 | 91.4 | 85.3 | 92.6 |
| Comparative Example 5 | 91.7 | 88.8 | 93.4 |
| Comparative Example 6 | 90.6 | 86.8 | 91.2 |

Example 1 includes SiOx coated with carbon on the first negative electrode mixture layer as a negative electrode active material, and the SiOx is located in the lower layer despite a large fine powder content and may reduce side reactions with the electrolyte, thereby exhibiting excellent effect in terms of high-temperature capacity retention rate. Furthermore, the negative electrode of Example 1 includes SiOx doped with Mg in the second negative electrode mixture layer, which is the upper layer, and is controlled to include a small amount of fine powder, so that room temperature capacity retention rate and rapid charge capacity retention rate are excellent despite including a large amount of silicon-based active material. This is because contraction and expansion of the silicon-based negative electrode active material are suppressed by doping with Mg, thereby suppressing cracks and short circuits.

Meanwhile, Comparative Example 1 shows excellent results in high-temperature capacity retention rate by including carbon-coated SiOx having a high fine powder content in the first negative electrode mixture layer, as in Example 1, but the second negative electrode mixture layer, which is an upper layer, includes carbon-coated SiOx with a reduced fine power content to degrade performance of suppressing contraction and expansion in the charging and discharging process, so that Comparative Example 1 was evaluated to exhibit the results of room temperature capacity retention rate and lower rapid charge capacity retention rate lower than those of Example 1.

Unlike Example 1, Comparative Example 2 is a case in which the first negative electrode mixture layer includes carbon-coated SiOx having a high fine powder content and the second negative electrode mixture layer, which is an upper layer, includes Mg-doped SiOx having a high fine powder content. Although contraction and expansion of the silicon-based negative active material may be suppressed by SiOx doped with Mg, the silicon-based active material with a large specific surface area including a large amount of fine powder has a low high-temperature capacity retention rate due to a side reaction with the electrolyte, and an effect of increasing a contact area between the negative electrode active materials and between the negative electrode active material and the negative electrode current collector in the lower layer, exhibiting the results of the room temperature and rapid charge capacity retention rates lower than those of Example 1.

Meanwhile, Comparative Example 3 is a case in which both the first and second negative electrode mixture layers include Mg-doped SiOx, and as the contraction and expansion of the negative electrode active material during charging and discharging of the battery are suppressed to exhibit excellent results in room temperature and rapid charge capacity retention rates, but the high-temperature capacity retention rate was significantly reduced, which is considered to be caused by a side reaction between the silicon-based active material in the first negative electrode mixture layer and the electrolyte.

In addition, Comparative Example 4 shows low room temperature capacity retention rate and low rapid charge capacity retention rate. The silicon-based negative electrode active material is isolated due to contraction and expansion of the silicon-based negative electrode active material due to a small content of carbon-coated SiOx of fine powder in the first negative electrode mixture layer, which is the lower layer, thereby lowering the room temperature capacity retention rate and the lifespan characteristics.

In addition, Comparative Example 5 is a case in which the first negative electrode mixture layer includes Mg-doped SiOx having a high fine powder content and the second negative electrode mixture layer includes carbon-coated SiOx having a low fine powder content. Comparative Example 6 is a case in which the first negative electrode mixture layer includes Mg-doped SiOx having a low fine powder content and the second negative electrode mixture layer includes carbon-coated SiOx having a low fine powder content, and thus, the room temperature capacity retention rate and the rapid charge capacity retention rate were low due to contraction and expansion of the silicon-based negative electrode active material in the upper layer.

According to an exemplary embodiment in the present disclosure, by including the silicon-based active material, the high-capacity negative electrode may be provided, and the lifespan characteristics of the negative electrode may be improved during rapid charging and discharging and at high temperatures.

According to an exemplary embodiment in the present disclosure, a side reaction between the silicon-based negative electrode active material and the electrolyte may be prevented, thereby suppressing an increase in resistance.

Only specific examples of implementations of certain exemplary embodiments are described. Variations, improvements and enhancements of the disclosed exemplary embodiments and other exemplary embodiments may be made based on the disclosure of this patent document.

## Claims

1. A negative electrode for a secondary battery, the negative electrode comprising:
a negative electrode current collector;
a first negative electrode mixture layer including a first silicon-based negative electrode active material on at least one surface of the negative electrode current collector; and
a second negative electrode mixture layer including a second silicon-based negative electrode active material on the first negative electrode mixture layer,
wherein the second silicon-based negative electrode active material is SiOx (0≤x<2) doped with a metal element.

2. The negative electrode of claim 1, wherein the metal element is at least one selected from the group consisting of Mg, Li, Ca, Al, Fe, Ti, and V.

3. The negative electrode of claim 1 or claim 2, wherein a content of the second silicon-based negative electrode active material having a particle size of 2.5 um or less is less than 5 volume% of a total content of the second silicon-based negative electrode active material.

4. The negative electrode of any one of claims 1 to 3, wherein the first silicon-based negative electrode active material is SiOx coated with carbon.

5. The negative electrode of any one of claims 1 to 4, wherein a content of the first silicon-based negative electrode active material having a particle size of 2.5 um or less is 1 volume% or more and less than 15 volume% of a total content of the first silicon-based negative electrode active material.

6. The negative electrode of any one of claims 1 to 5, wherein a content of the second silicon-based negative electrode active material is greater than a content of the first silicon-based negative electrode active material with respect to a total weight of the first negative electrode mixture layer and the second negative electrode mixture layer.

7. The negative electrode of any one of claims 1 to 6, wherein, in the first negative electrode mixture layer, a content of the first silicon-based negative electrode active material is 2 to 6 wt%.

8. The negative electrode of any one of claims 1 to 7, wherein, in the second negative electrode mixture layer, a content of the second silicon-based negative electrode active material is 7 to 30 wt%.

9. The negative electrode of any one of claims 1 to 8, wherein the first negative electrode mixture layer and the second negative electrode mixture layer further include a graphite-based active material.

10. The negative electrode of any one of claims 1 to 9, wherein the first negative electrode mixture layer and the second negative electrode mixture layer further include a conductive agent.

11. The negative electrode of any one of claims 1 to 10, wherein the second negative electrode mixture layer includes at least one selected from the group consisting of SWCNT, TWCNT, and MWCNT as a conductive agent.

12. A lithium secondary battery comprising:
the negative electrode of any one of claims 1 to 11, a positive electrode, and a separator interposed between the negative electrode and the positive electrode.
